# EUROPEAN PATENT APPLICATION

(11) **EP 4 271 013 A1**
(43) Date of publication of application: **01.11.2023**
(21) Application number: 21920198.5
(22) Date of filing: 19.01.2021
(51) Int. Cl.: H04W 12/04, H04L 9/16

(54) **MESSAGE SENDING METHOD AND RECEIVING METHOD AND APPARATUSES**

(71) Applicant: Huawei Technologies Co., Ltd., Shenzhen, Guangdong 518129 (CN)
(72) Inventor: LI, Ming, Shenzhen, Guangdong 518129 (CN); CHEN, Youlei, Shenzhen, Guangdong 518129 (CN); KONG, Xiangrui, Shenzhen, Guangdong 518129 (CN)
(74) Representative: Pfenning, Meinig & Partner mbB
(86) International application number: PCT/CN2021/072744
(87) International publication number: WO 2022/155793

(57) **Abstract**

This application discloses a message sending method and apparatus and a message receiving method and apparatus. The message sending method includes: A network device receives a request message sent by a first on-board unit OBU, where the request message is used to request to update a key for the first OBU; and the network device determines a target roadside unit RSU based on location information that is of the first OBU and that is carried in the request message and a coverage area for which at least one RSU is responsible, and sends an update message to the target RSU, where the update message includes a service ID of the target RSU and a vehicle service ID of the first OBU, and the vehicle service ID of the first OBU is used by the target RSU to obtain an updated key of the first OBU. In the method, a vehicle service ID of an OBU is delivered by using a target RSU near the OBU, to determine at least one key associated with the OBU, so as to implement distributed updating of the key, prevent the key from being deciphered and leaked, and improve security of encrypted communication.

## Description

### TECHNICAL FIELD

This application relates to the field of Internet of Vehicles technologies, and in particular, to a message sending method and apparatus and a message receiving method and apparatus.

### BACKGROUND

Vehicle to everything (vehicle to everything, V2X) is a technology in which a vehicle is interconnected to a surrounding object, and includes a plurality of communication modes such as vehicle to infrastructure (vehicle to infrastructure, V2I), vehicle to network (vehicle to network, V2N), vehicle to vehicle (vehicle to vehicle, V2V), and vehicle to pedestrian (vehicle to pedestrian, V2P). In an autonomous driving scenario, an autonomous driving capability based on vehicle-road collaboration may be constructed by using V2X. V2V communication can help autonomous driving, to implement lane assisted driving, and is mainly implemented by sending location information of vehicles by the vehicles by using V2V For example, vehicle coordinates are broadcast by using V2V, so that a vehicle can determine a relative location between the vehicle and another vehicle. A plurality of functions such as forward collision warning, blind area/lane change assistance, emergency braking warning, reverse overtaking collision warning, intersection collision warning, and left-turn assistance are implemented based on sensing and positioning of a lane and a surrounding object by a vehicle sensor.

In a corresponding V2V scenario, a vehicle needs to broadcast location coordinates of the vehicle at any time, to form a continuous track. Therefore, in this case, coordinate data broadcast by using V2V needs to be protected. Usually, a broadcast encryption solution is used. A service ID is introduced, and the service ID is associated with a broadcast key. A network server is responsible for key management and verification. A vehicle registers a corresponding service based on the service ID and obtains a broadcast key associated with the service ID. In a use phase, broadcast data is first determined and encrypted. After authentication of another vehicle succeeds, the another vehicle obtains the broadcast key associated with the service ID, and decrypts an encrypted broadcast message.

In the broadcast encryption solution, although a to-be-authenticated vehicle obtains a broadcast key, all to-be-authenticated vehicles obtain a same key. Consequently, when V2V broadcast communication is performed between vehicles, once transmitted encrypted data is intercepted and decrypted, the key is leaked. In addition, the vehicles use a same key for encryption during V2V communication, and the key is not updated. Consequently, communication data has a security risk.

### SUMMARY

This application provides a message sending method and a message receiving method, to resolve the foregoing technical problem. Specifically, the following technical solutions are disclosed:

According to a first aspect, this application provides a message sending method. The method is applied to a network device, for example, a server, and the method includes: A network device receives a request message sent by a first on-board unit OBU, where the request message is used to request to update a key for the first OBU, and the request message carries location information of the first OBU;
the network device determines a target roadside unit RSU based on the location information of the first OBU and a coverage area for which at least one RSU is responsible, where each of the at least one RSU is responsible for vehicle communication in a coverage area of the RSU, and a location of the first OBU is in a coverage area for which the target RSU is responsible; and
the network device sends an update message to the target RSU, where the update message includes a service ID of the target RSU and a vehicle service ID of the first OBU, the service ID of the target RSU is configured by the network device, and the vehicle service ID of the first OBU is used by the target RSU to obtain an updated key of the first OBU.

Optionally, the updated key of the first OBU forms a first key set.

According to the method provided in this aspect, when receiving a request message for updating a key of an OBU of a vehicle, a network device of a dedicated cloud determines a target RSU near the vehicle based on location information reported by the vehicle and a coverage area of each of at least one RSU, and sends a vehicle service ID of the OBU to the target RSU. The target RSU establishes a C-V2X connection to the OBU when the OBU travels to the vicinity of the target RSU, and the target RSU delivers a key set corresponding to the vehicle service ID of the OBU, to implement distributed updating of a key, and prevent the key from being deciphered and leaked. In the method, security of encrypted communication is improved.

In addition, in the update message delivered by the network device, the vehicle service ID of the OBU corresponds to one key set, and the key set includes at least one key. Therefore, a cloud network device sends the key set including the at least one key to the OBU at one time, so that the OBU randomly and alternately uses the key set, to improve efficiency of updating an offline near-end key.

Optionally, with reference to the first aspect, in a possible implementation of the first aspect, that the network device configures a service ID of one RSU for each RSU that is registered with the network device includes: The network device receives a registration request sent by the at least one RSU. The registration request includes currently reported location information of the RSU; and the network device configures one RSU service ID for each of the at least one RSU.

Optionally, with reference to the first aspect, in another possible implementation of the first aspect, that the network device receives a registration request sent by the at least one RSU includes: The network device receives a registration request that is sent by each of the at least one RSU through a wired connection.

In this implementation, an updated key set is transmitted by the network device to a nearby target RSU through a wired network, and then the target RSU sends the updated key set to a to-be-updated vehicle through a near-end C-V2X connection. An entire transmission resource does not include a network resource between the vehicle and the network device. Therefore, network resource overheads are reduced, network congestion caused when a large quantity of key update requests occupy a large amount of network bandwidths is avoided, and stability of a wireless network is affected. In the method, an edge distributed update architecture is used, to not only improve key update efficiency, but also avoid network congestion.

Optionally, with reference to the first aspect, in still another possible implementation of the first aspect, that the network device determines a target RSU based on the location information of the first OBU and a coverage area for which at least one RSU is responsible includes: The network device determines, based on the location information of the first OBU, a specific coverage area to which the first OBU belongs and a specific RSU that is responsible for the coverage area, and determines the RSU as the target RSU.

In this implementation, in consideration of mobility of the vehicle, the target RSU may be determined as follows: Location coordinates reported by the first OBU are used as a circle center and a moving speed and a time length of the first OBU are as a radius, to form a circular area, and all RSUs that have an overlapping area with the circular area are classified into the target RSU, so that one or more nearby RSUs can be allocated to the first OBU, and a to-be-updated key set required by the first OBU can be provided for the first OBU.

Optionally, with reference to the first aspect, in still another possible implementation of the first aspect, before the network device receives the request message sent by the first OBU, the method further includes: The network device completes registration of the first OBU, and allocates the vehicle service ID of the first OBU to the first OBU. The vehicle service ID of the first OBU is used to uniquely identify the first OBU.

Optionally, with reference to the first aspect, in still another possible implementation of the first aspect, that the network device sends an update message to the target RSU includes: The network device sends the update message to the target RSU based on an HTTPS specification. In this implementation, the network device sends the update message to the target RSU based on a wired HTTPS protocol, and does not perform transmission through a network resource Uu interface between the OBU of the vehicle and the network device, to reduce network resource overheads and avoid network congestion caused by a large quantity of request messages.

Optionally, with reference to the first aspect, in still another possible implementation of the first aspect, the method further includes: The network device sends, to the target RSU, a first key set that matches the vehicle service ID of the first OBU. The first key set includes the updated key of the first OBU.

According to a second aspect, this application further provides a message receiving method. The method may be applied to an RSU, for example, a first RSU. Specifically, the method includes: A first RSU receives an update message sent by a network device. The update message includes a service ID of the first RSU and a vehicle service ID of a first OBU, the service ID of the first RSU is configured by the network device, and the vehicle service ID of the first OBU is used by the first RSU to obtain an updated key of the first OBU. The first RSU determines the updated key of the first OBU based on the service ID of the first RSU and the vehicle service ID of the first OBU. The first RSU sends the updated key of the first OBU to the first OBU when the first RSU establishes a connection to the first OBU.

Optionally, with reference to the second aspect, in a possible implementation of the second aspect, the method further includes: The first RSU sends a first registration request to the network device. The first registration request includes location information of the first RSU, and the first registration request is used to register the first RSU with the network device.

Optionally, with reference to the second aspect, in another possible implementation of the second aspect, that the first RSU establishes a connection to the first OBU includes: The first RSU establishes a near-end connection to the first OBU when detecting that the first OBU is located in a coverage area for which the first RSU is responsible or is close to a coverage area for which the first RSU is responsible.

Optionally, with reference to the second aspect, in another possible implementation of the second aspect, sending a relationship list of the first OBU to the first OBU includes: The first RSU sends the relationship list of the first OBU through a PC5 interface.

Optionally, with reference to the second aspect, in still another possible implementation of the second aspect, the method further includes: The first RSU receives a first key set sent by the network device. The first key set matches the vehicle service ID of the first OBU. That the first RSU determines the updated key of the first OBU based on the service ID of the first RSU and the vehicle service ID of the first OBU includes: The first RSU determines to use the first key set as the updated key of the first OBU.

Alternatively, the first RSU searches, based on the vehicle service ID of the first OBU, a first correspondence for a first key set that matches the vehicle service ID of the first OBU. The first correspondence includes a correspondence between the vehicle service ID of the first OBU and the first key set.

According to a third aspect, this application provides a message sending apparatus. The apparatus may be applied to the foregoing network device, and the apparatus includes a receiving unit, a processing unit, a sending unit, a configuration unit, and the like.

The receiving unit is configured to receive a request message sent by a first on-board unit OBU. The request message is used to update a key for the first OBU, and the request message includes location information of the first OBU.

The processing unit is configured to: determine a target RSU based on the location information of the first OBU and a coverage area for which at least one RSU is responsible. Each of the at least one RSU is responsible for vehicle communication in a coverage area of the RSU, and a location of the first OBU is in a coverage area for which the target RSU is responsible; and generate an update message.

The sending unit is configured to send an update message to the target RSU. The update message includes a service ID of the target RSU and a vehicle service ID of the first OBU, the service ID of the target RSU is configured by the network device, and the vehicle service ID of the first OBU is used by the target RSU to obtain an updated key of the first OBU.

Optionally, with reference to the third aspect, in a possible implementation of the third aspect, the receiving unit is further configured to receive a registration request sent by the at least one RSU. The registration request includes currently reported location information of the RSU. The configuration unit is configured to configure one RSU service ID for each of the at least one RSU.

Optionally, with reference to the third aspect, in another possible implementation of the third aspect, the receiving unit is specifically configured to receive the registration request sent by the RSU through a wired connection.

Optionally, with reference to the third aspect, in still another possible implementation of the third aspect, the configuration unit is further configured to: before the request message sent by the first OBU is received, complete registration of the first OBU, and allocate the vehicle service ID of the first OBU to the first OBU.

Optionally, with reference to the third aspect, in still another possible implementation of the third aspect, the sending unit is further configured to send the update message to the target RSU based on a hypertext transfer protocol secure HTTPS specification.

Optionally, with reference to the third aspect, in still another possible implementation of the third aspect, the sending unit is further configured to send, to the target RSU, a first key set that matches the vehicle service ID of the first OBU. The first key set includes the updated key of the first OBU.

Optionally, with reference to the third aspect, in still another possible implementation of the third aspect, the sending unit is further configured to send the update message to the target RSU when the processing unit detects that usage of a current key of the first OBU is that the current key is to expire.

According to a fourth aspect, this application further provides a message receiving apparatus. The apparatus may be applied to the RSU, and the apparatus includes:
a receiving unit, configured to receive an update message sent by a network device, where the update message includes a service ID of a first RSU and a vehicle service ID of a first OBU, the service ID of the first RSU is configured when the first RSU is registered with the network device, and the vehicle service ID of the first OBU is used by the first RSU to obtain an updated key of the first OBU;
a processing unit, configured to determine the updated key of the first OBU based on the service ID of the first RSU and the vehicle service ID of the first OBU; and
a sending unit, configured to send the updated key of the first OBU to the first OBU when the sending unit establishes a connection to the first OBU.

Optionally, with reference to the fourth aspect, in a possible implementation of the fourth aspect, the sending unit is further configured to send a first registration request to the network device. The first registration request includes location information of the first RSU, and the first registration request is used to register the first RSU with the network device. The network device configures the service ID of the first RSU for the first RSU after receiving the first registration request, to complete registration of the first RSU.

Optionally, with reference to the fourth aspect, in another possible implementation of the fourth aspect, the processing unit is further configured to establish a near-end connection to the first OBU when detecting that the first OBU is located in a coverage area for which the first RSU is responsible or is close to a coverage area for which the first RSU is responsible.

Optionally, with reference to the fourth aspect, in still another possible implementation of the fourth aspect, the receiving unit is further configured to receive a first key set sent by the network device. The first key set matches the vehicle service ID of the first OBU. The processing unit is further configured to determine to use the first key set as the updated key of the first OBU.

Optionally, with reference to the fourth aspect, in still another possible implementation of the fourth aspect, the sending unit is specifically configured to send the update message through a PC5 interface.

According to a fifth aspect, this application further provides a communication device. The communication device includes a processor and a memory, and the processor is coupled to the memory. Specifically, the memory is configured to store computer program instructions, and the processor is configured to execute the instructions stored in the memory, so that the communication device performs the method in the first aspect and the implementations of the first aspect, or performs the method in the second aspect and the implementations of the second aspect.

Specifically, functions of the units and modules such as the configuration unit, the receiving unit, the processing unit, and the sending unit in the third aspect or the fourth aspect may be implemented by using the processor and the memory.

Optionally, the communication device is a processing chip or a chip system.

Optionally, when the communication device is a network device in a dedicated cloud or a functional module deployed in the network device, the device may perform the method in the first aspect and the implementations of the first aspect.

When the communication device is a roadside device, for example, an RSU, the device may perform the method in the second aspect and the implementations of the second aspect.

In addition, the communication device further includes components such as at least one communication interface, a transceiver, and a sensor.

According to a sixth aspect, this application further provides a communication system, for example, a V2X system. The system includes a first network device, at least one RSU, and at least one OBU. The first network device is connected to each RSU in a wired manner, the first network device is connected to each OBU through a wireless network, each RSU communicates with an OBU in a coverage area of the RSU through a C-V2X interface, and OBUs also communicate with each other through a C-V2X interface.

The communication system provides a message sending method and a message receiving method. Details are as follows:

The first network device receives a registration request sent by the at least one RSU, and configures one RSU service ID for each RSU that requests to be registered. The RSU service ID is used to uniquely identify each RSU, and each RSU is responsible for vehicle communication in a coverage area of the RSU.

The first network device receives the registration request sent by the at least one RSU. A registration request reported by each RSU carries location information of the RSU.

The first network device receives a request message sent by a first OBU. The request message is used to request to update a key for the first OBU, and the request message carries location information of the first OBU.

The first network device determines a target RSU based on the location information of the first OBU and a coverage area for which the at least one RSU is responsible. A location of the first OBU is in a coverage area for which the target RSU is responsible. The first network device sends an update message to the target RSU. The update message includes a service ID of the target RSU and a vehicle service ID of the first OBU, and the vehicle service ID of the first OBU is used by the target RSU to obtain an updated key of the first OBU.

The target RSU is a first RSU.

In addition, with reference to the sixth aspect, in a possible implementation of the sixth aspect, the method further includes:

The first RSU establishes a near-end connection to the first OBU, and sends the updated key of the first OBU to the first OBU after verifying that authentication performed on the first OBU succeeds.

The first OBU receives the updated key sent by the first RSU, and selects one or more keys from the updated key for use.

In addition, the first network device, the first RSU, and the first OBU are further configured to perform the method in the first aspect, the second aspect, and the implementations of the first aspect and the second aspect.

According to a seventh aspect, this application further provides a computer-readable storage medium. The storage medium stores instructions, so that when the instructions run on a computer or a processor, the method in the first aspect and the implementations of the first aspect can be performed, and the method in the second aspect and the implementations of the second aspect can be further performed.

In addition, this application further provides a computer program product. The computer program product includes computer instructions. When the instructions are executed by a computer or a processor, the method in the first aspect and the implementations of the first aspect can be performed, and the method in the second aspect and the implementations of the second aspect can be further performed.

It should be noted that beneficial effects corresponding to the technical solutions of the implementations of the second aspect to the seventh aspect are the same as beneficial effects of the first aspect and the implementations of the first aspect. For details, refer to descriptions of the beneficial effects of the first aspect and the implementations of the first aspect. Details are not described again.

### BRIEF DESCRIPTION OF DRAWINGS

FIG. 1 is a schematic diagram of an architecture of an Internet of Vehicles system according to an embodiment of this application;
FIG. 2 is a flowchart of a key update method according to an embodiment of this application;
FIG. 3 is a schematic diagram of a structure of an apparatus according to an embodiment of this application;
FIG. 4 is a schematic diagram of a structure of a communication device according to an embodiment of this application; and
FIG. 5 is a schematic diagram of a structure of a communication system according to an embodiment of this application.

### DESCRIPTION OF EMBODIMENTS

The following describes technical solutions of this application with reference to accompanying drawings in embodiments of the present invention. To facilitate understanding of the technical solutions provided in embodiments of the present invention, a technical scenario to which embodiments of the present invention are applicable is first described.

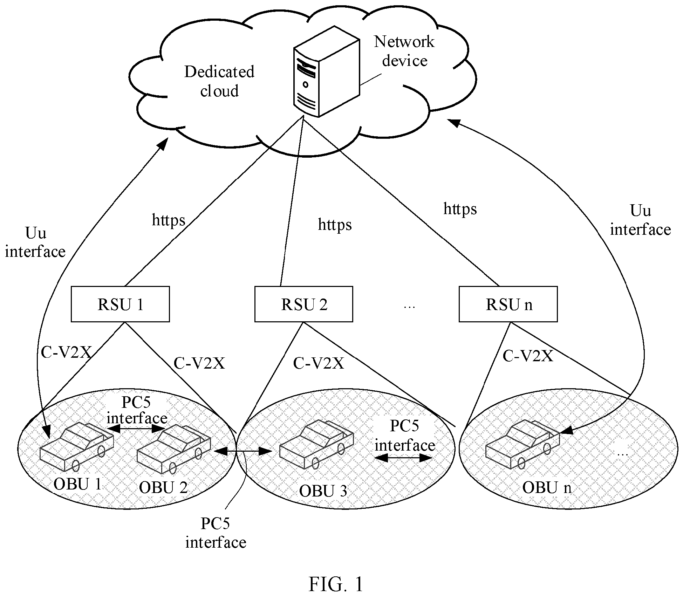

FIG. 1 is a schematic diagram of an architecture of an Internet of Vehicles system according to an embodiment of this application. As shown in FIG. 1, the system includes a dedicated cloud, at least one roadside unit (roadside unit, RSU), and at least one on-board unit (on-board unit, OBU). The dedicated cloud includes at least one network device, for example, an Internet of Vehicles server. The Internet of Vehicles server includes but is not limited to a map key security server, a vehicle fleet management server, an autonomous driving server, or a social network server. In addition, the cloud may further include an application server, a controller, a data center, and the like.

A network device in the dedicated cloud and the RSU are connected through a wired connection, for example, communicate through hypertext transfer protocol secure (Hypertext Transfer Protocol Secure, HTTPS). The HTTPS is a transmission protocol for secure communication through a computer network. In the HTTPS, communication is performed based on an http, but a data packet is encrypted based on a secure sockets layer (Secure Sockets Layer, SSL) protocol or a transport layer security (Transport Layer Security, TLS) protocol. The HTTPS may be mainly used to authenticate an identity of a website server, to protect privacy and integrity of exchanged data.

Each RSU covers a specific area range, and a connection may be established between the RSU and the OBU by using C-V2X. C-V2X (cellular-V2X, cellular-V2X) is a cellular network-based V2X technology defined in the 3rd generation partnership project (3rd Generation Partnership Project, 3GPP), that is, a vehicular wireless communication technology evolved based on cellular network communication technologies such as 3G, 4G, and 5G. C-V2X includes LTE-V2X and 5G-V2X. LTE-V2X is 4G-V2X. From a perspective of technology evolution, LTE-V2X can smoothly evolve into 5G-V2X.

C-V2X includes two types of communication interfaces: a PC5 interface (direct connection communication interface) and a Uu interface (cellular network communication interface).

The PC5 interface is a communication interface between terminals, that is, a short-range direct communication interface among a vehicle, a person, and a road infrastructure. For example, the PC5 interface is configured to implement short-range communication between user equipment (user equipment, UE) and UE, or between UE and an RSU. The PC5 interface is featured by a low latency, a high capacity, and high reliability that are brought by a direct connection, broadcasting, and network scheduling. In addition, the PC5 interface may be used for V2X communication regardless of whether there is coverage of a cellular network.

The Uu interface is used to implement communication between the LTE and a network side. When a terminal device (for example, a vehicle-mounted terminal, a smartphone, or an RSU) that supports C-V2X is in a coverage area of a cellular network deployed by a base station, the terminal device can use the Uu interface for communication under control of the cellular network, for example, communication between a UMTS terrestrial radio access network (UMTS terrestrial radio access network, UTRAN) and the OBU.

In this embodiment, the OBU of the vehicle-mounted terminal may communicate with the network device through a Uu interface.

C-V2X combines the Uu interface and the PC5 interface, to support each other and form effective redundancy to ensure communication reliability.

In this embodiment, each RSU may be an entity that is deployed on a roadside device and that has a C-V2X communication capability. A specific form of the RSU is not limited in this embodiment.

It should be understood that the technical solutions in this embodiment of this application may be applied to various communication systems such as a global system for mobile communications (global system for mobile communications, GSM), a code division multiple access (code division multiple access, CDA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile communication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR).

In addition, the OBU may be a terminal device. The terminal device may be a vehicle-mounted terminal, user equipment, an access terminal, a subscriber unit, a subscriber station, a mobile station, a mobile device, a wireless communication device, a user agent, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this embodiment of this application.

The following describes in detail the technical solutions provided in embodiments.

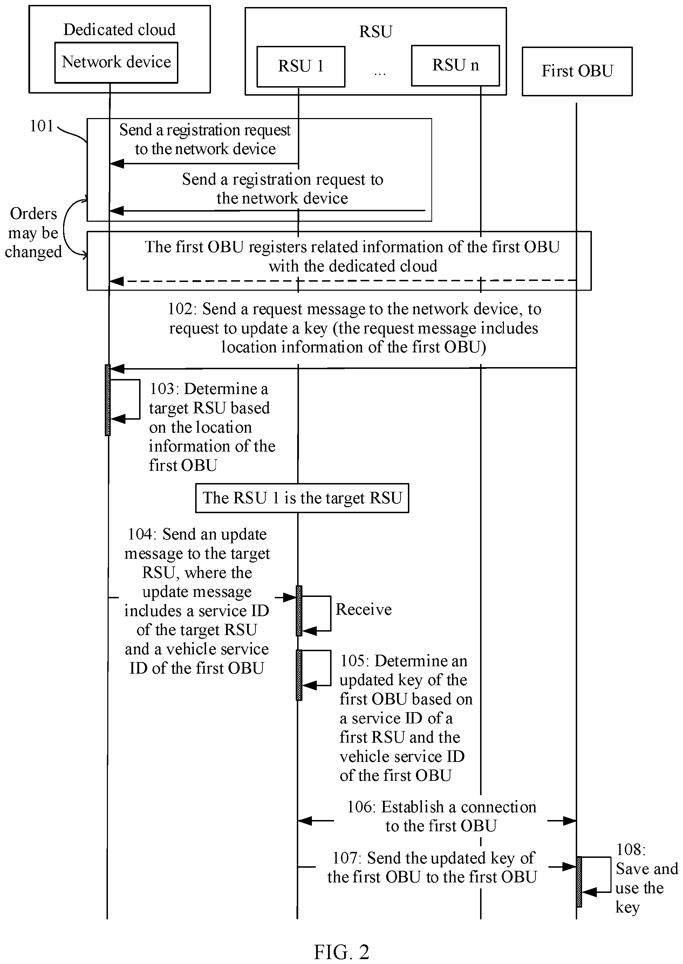

A technical solution in an embodiment provides a method for periodically updating an encryption key when V2V secure communication data is encrypted for transmission. In the method, a practical deployment and solution are provided for features such as large-scale cloud remote communication in the V2V field and V2X short-range communication. Specifically, refer to FIG. 2. The method includes:
101: A network device receives a registration request sent by at least one RSU, where a function of each registration request is that an RSU that sends the registration request registers related information of the RSU with the network device.

Each RSU is responsible for vehicle communication in a coverage area of the RSU. For example, as shown in FIG. 1, coverage areas for which an RSU 1, an RSU 2, and an RSU n are responsible each are represented by a circular grid. Coverage areas for which different RSUs are responsible may partially overlap or may not overlap. This is not limited in this embodiment.

The registration request includes reported location information of the RSU, and the location information includes an address of the RSU, for example, location coordinates of the RSU. Specifically, a first RSU (or referred to as an "RSU 1") is used as an example. In step 101, the first RSU sends a first registration request to the network device. Correspondingly, the network device receives the first registration request reported by the first RSU, and the first registration request includes location coordinates of the first RSU.

In addition, when sending a registration request, each RSU sends the registration request to the network device based on an HTTPS specification. For example, when accessing a network, the first RSU sends the first registration request to the network device based on the HTTPS protocol specification, to complete a registration task of the first RSU in the network device.

A wired connection, for example, an HTTPS connection, that is pre-established between each RSU and a network device in a dedicated cloud includes a TCP three-way handshake process. A process of establishing the HTTPS connection is not described in detail in this embodiment.

The method further includes: After receiving the registration request reported by the at least one RSU, the network device allocates a service ID of one RSU to each RSU. The service ID of the RSU is used to uniquely identify the RSU. For example, after receiving the first registration request sent by the first RSU, the network device configures a service ID of the first RSU for the first RSU. The service ID of the first RSU is used to uniquely identify the first RSU.

It should be understood that step 101 is a preparation procedure in a registration phase of each RSU. After the preparation procedure is completed, step 102 may directly start to be performed.

102: A first OBU sends a request message to the network device, where the request message is used to request to update a key for the first OBU. Correspondingly, the network device receives the request message sent by the first OBU.

Optionally, the request message may be briefly referred to as "request".

The request message includes location information of the first OBU, for example, includes an address or location coordinates of the first OBU. Optionally, the request message further includes an identifier of the first OBU, for example, a vehicle number of the first OBU.

Specifically, the first OBU sends the request message to the network device through a Uu interface. A sending occasion may be sending the request message when the first OBU needs to update the key. For example, when the first OBU detects that a validity period of a currently used key is to expire or a quantity of currently available keys of the first OBU is less than a preset quantity, step 102 is triggered and performed.

In addition, before step 102, the method further includes: The first OBU has registered related information of the first OBU with the dedicated cloud. The related information of the first OBU includes information such as an identifier of the first OBU. When the first OBU registers the related information with the network device in the dedicated cloud, the network device automatically allocates one vehicle service ID to the first OBU. The vehicle service ID is used to uniquely identify the first OBU.

It should be noted that a process in which the first OBU registers the related information of the first OBU with the dedicated cloud may be completed before step 101, or may be completed after step 101. This is not limited in this embodiment.

103: The network device determines a target RSU based on the location information of the first OBU and a coverage area for which the at least one RSU is responsible.

Specifically, the network device determines the target RSU based on the location information of the first OBU and the coverage area for which the at least one RSU is responsible. There may be one or more target RSUs. Specifically, a quantity of target RSUs is related to a location of the first OBU. For example, if the first OBU is located in a coverage area of a specific RSU, the RSU corresponding to the coverage area is determined as the target RSU. Alternatively, the location of the first OBU may be used as a center of a circle, a radius length may be set based on a moving speed of the first OBU, and a circle is drawn. It is determined that a coverage area of the circle overlaps a coverage area of a specific RSU, and the RSU with a range of an overlapping area is the target RSU.

In an example, the network device determines, based on the location of the first OBU, the first RSU as the target RSU if the location of the first OBU is located in a coverage area for which the first RSU is responsible. In another example, if there is an overlapping part between an area formed by drawing a circle by using a location of the first OBU as a center of a circle and a coverage area for which a second RSU and a third RSU each are responsible, it is determined that the target RSU is the second RSU and the third RSU.

104: The network device sends an update message to the target RSU, where the update message includes the service ID of the target RSU and the vehicle service ID of the first OBU. Correspondingly, the target RSU receives the update message sent by the network device.

The service ID of the target RSU is configured when each RSU is registered with the network device in step 101. The vehicle service ID of the first OBU is configured and generated by the network device for the first OBU in step 102.

In addition, a vehicle service ID of each OBU is associated with a key, and may be preconfigured for keys in different application scenarios of V2X. The network device (or the dedicated cloud) is responsible for providing a key management and verification service for the vehicle. The network device registers a corresponding service based on a vehicle service ID of a different OBU, and obtains a key set associated with the vehicle service ID. The key set includes at least one key.

In this embodiment, after determining the target RSU, the network device obtains the service ID allocated to the target RSU, establishes a binding relationship between the service ID of the target RSU and the vehicle service ID of the first OBU, and sends the update message including the service ID of the target RSU and the vehicle service ID of the first OBU to the target RSU.

Optionally, if there are two or more target RSUs, the network device sends an update message to each target RSU. A specific sending manner may be sending the update message based on the HTTPS protocol specification. For example, if the target RSU includes the first RSU and the second RSU, the network device sends a first update message to the first RSU, and sends a second update message to the second RSU. The first update message includes the service ID of the first RSU and the vehicle service ID of the first OBU, and the second update message includes a service ID of the second RSU and the vehicle service ID of the first OBU.

In this embodiment, one target RSU is used as an example, and that the target RSU is the first RSU is used for description. In this case, that the target RSU receives the update message is that the first RSU receives the update message. The update message includes the service ID of the first RSU and the vehicle service ID of the first OBU.

105: The first RSU determines an updated key of the first OBU based on the service ID of the first RSU and the vehicle service ID of the first OBU.

In a possible implementation, the first RSU determines, based on the vehicle service ID of the first OBU, a first key set corresponding to the vehicle service ID of the first OBU. A key included in the first key set is the updated key of the first OBU.

Specifically, because there is a correspondence between a vehicle service ID of an OBU and a key set, a relationship list of the first OBU may be established. The relationship list of the first OBU includes a correspondence between the service ID of the first RSU, the vehicle service ID of the first OBU, and the first key set, as shown in Table 1.

**Table 1. Relationship list of a first OBU**

| Vehicle service ID | Service ID of a first RSU | First key set | Original key | Address information of the first RSU | Address information of a first OBU |
|---|---|---|---|---|---|
| Vehicle service ID of an OBU 1 | Service ID of an RSU 1 | Kb 2, Kb 3, ..., and Kb 10 | Kb 1 | Location coordinates of the RSU 1 | Location coordinates of the OBU 1 |

Optionally, the relationship list of the first OBU may further include the original key, and the original key is a key used before the first OBU updates the key. Alternatively, the address information of the first RSU and the address information of the first OBU may be further included.

It should be noted that the correspondence between a vehicle service ID of an OBU and a key set may be preconfigured by the network device, and then delivered to the target RSU; or a key store including all key sets and a correspondence established between each key set and a vehicle service ID of an OBU may be sent to the target RSU. A process in which the RSU obtains the key set and obtains a correspondence between vehicle service IDs of different OBUs and different key sets is not limited in this embodiment.

Optionally, step 104 may be further replaced with 104-1: The network device sends the relationship list of the first OBU to the first RSU.

In a possible implementation, the network device periodically monitors usage of a current key of the first OBU, and if the key of the first OBU is to expire, actively sends the relationship list of the first OBU to the first RSU. The network device sends the relationship list of the first OBU based on the HTTPS protocol specification. Correspondingly, the first RSU receives the relationship list that is of the first OBU and that is sent by the network device. After receiving the relationship list that is of the first OBU and that is sent by the network device, the first RSU searches the key store for the corresponding first key set based on the vehicle service ID that is of the first OBU and that is carried in the update message.

The method in this embodiment further includes a key update process. The key update process specifically includes:
106: The first RSU establishes a connection to the first OBU.

When the first RSU detects that the first OBU is located in a coverage area of the first RSU or is close to the coverage area for which the first RSU is responsible, the first RSU establishes a C-V2X connection to the first OBU.

107: The first RSU sends the updated key of the first OBU to the first OBU after verifying that authentication performed on the first OBU succeeds.

Specifically, after verifying, based on the relationship list of the first OBU, that the vehicle service ID of the first OBU is qualified, the first RSU sends, through a PC5 interface, a first key set including at least one key to the first OBU. Correspondingly, the first OBU receives, through the PC5 interface, the first key set sent by the first RSU.

The first key set may be transmitted by using a V2X message.

108: The first OBU stores the first key set, and uses a key in the first key set.

Specifically, the first OBU selects a key from the first key set for replacement and use. In a possible implementation, the first OBU uses the at least one key in the first password set in a top-down sequence, or may select a key from the first password set for use based on another rule. The rule for selection may be configured by the network device end. For example, the first OBU receives a first indication sent by the first RSU. The first indication is used to indicate the rule in which the first OBU selects a to-be-used key from the first key set.

In addition, another vehicle-mounted terminal may also select a key based on a same rule, and perform replacement and use, to ensure that all selected and used keys are the same, and avoid an error. In this embodiment, a process in which the first OBU selects the key from the first key set and updates the key for use is not described in detail.

Optionally, in the key update procedure, in another possible implementation, the target RSU sends the relationship list of the first OBU to the first OBU, and after receiving the relationship list of the first OBU, the first OBU searches the corresponding first key set in the key store based on the vehicle service ID of the first OBU, to obtain at least one to-be-updated key.

According to the method provided in this embodiment, when receiving a key update request of the OBU of the vehicle, the network device in the dedicated cloud sends, to the selected target RSU by using a local wired high-speed V2X network, the update message including the service ID of the target RSU and the vehicle service ID of the OBU, and the target RSU can determine, based on content of the update message, the key set corresponding to the vehicle service ID of the OBU. When the OBU of the vehicle travels to the vicinity of the target RSU and establishes the C-V2X connection to the target RSU, the target RSU may immediately deliver the key set to the OBU, to implement distributed updating of a key, and prevent the key from being deciphered and leaked. In the method, security of encrypted communication is improved.

In addition, an updated key set is transmitted by the network device to the target RSU through a wired network and then the target RSU sends the updated key set to the OBU of the vehicle through a near-end C-V2X connection, without using a network resource between the OBU of the vehicle and the network device for transmission. Therefore, network resource overheads are reduced, network congestion caused when a large quantity of key update requests occupy a large amount of network bandwidths is avoided, and stability of a wireless network is affected. In the method, an edge distributed update architecture is used, to not only improve key update efficiency, but also avoid network congestion.

In addition, the key set delivered by the target RSU to the OBU of the vehicle includes a plurality of keys. In this way, a cloud network device delivers a plurality of key sequences to the vehicle at one time by using a nearby target RSU, so that the vehicle randomly and alternately uses the key sequences, to meet a requirement that the vehicle quickly and periodically updates a key, and further improve offline near-end key update efficiency.

It should be understood that, in this embodiment, another OBU may also initiate a key update request to the network device in the dedicated cloud. A process in which the another OBU requests and obtains the key set is the same as the foregoing process in which the first OBU obtains the first key set. For details, refer to steps 101 to 108 in the foregoing embodiment. Details are not described again.

The following describes an apparatus embodiment corresponding to the foregoing method embodiment.

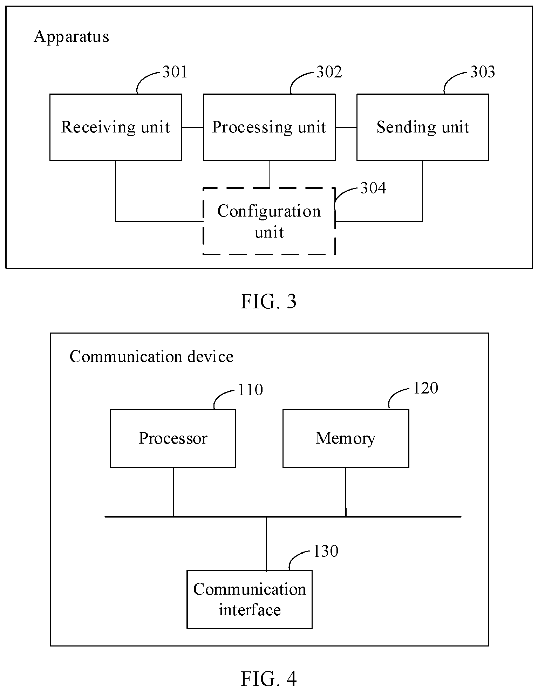

FIG. 3 is a schematic diagram of a structure of an apparatus according to an embodiment of this application. The apparatus may be a network device, or a component located in the network device, for example, a chip circuit. In addition, the apparatus may implement the method in the foregoing embodiment.

Specifically, as shown in FIG. 3, the apparatus includes a receiving unit 301, a processing unit 302, a sending unit 303, and a configuration unit 304. In addition, the apparatus may further include another unit or module, for example, a storage unit. This is not limited in this embodiment.

When the apparatus is used as a message sending apparatus, the receiving unit 301 is configured to receive a request message sent by a first OBU. The request message is used to update a key for the first OBU, and the request message includes location information of the first OBU.

The processing unit 302 is configured to determine a target roadside unit RSU based on the location information of the first OBU and a coverage area for which at least one RSU is responsible. Each of the at least one RSU is responsible for vehicle communication in a coverage area of the RSU, and a location of the first OBU is in a coverage area for which the target RSU is responsible.

The sending unit 303 is configured to send an update message to the target RSU. The update message includes a service ID of the target RSU and a vehicle service ID of the first OBU, the service ID of the target RSU is configured by the network device, and the vehicle service ID of the first OBU is used by the target RSU to obtain an updated key of the first OBU. There may be one or more updated keys of the first OBU.

Optionally, in a specific implementation, when the receiving unit 301 receives a registration request sent by the at least one RSU, the configuration unit 304 is further configured to configure one RSU service ID for each of the at least one RSU. The registration request includes currently reported location information of the RSU.

Optionally, in another specific implementation, the receiving unit 301 is specifically configured to receive the registration request sent by the at least one RSU through a wired connection.

Optionally, in still another specific implementation, before the receiving unit 301 receives the request message sent by the first OBU, the configuration unit 304 is further configured to: complete registration of the first OBU, and allocate the vehicle service ID of the first OBU to the first OBU.

Optionally, in still another specific implementation, the sending unit 303 is further configured to send the update message to the target RSU based on an HTTPS specification.

Optionally, in still another specific implementation, the sending unit 303 is further configured to send, to the target RSU, a first key set that matches the vehicle service ID of the first OBU. The first key set includes the updated key of the first OBU.

In addition, when the apparatus is a message receiving apparatus, for example, a first RSU, the receiving unit 301 is configured to receive an update message sent by a network device. The update message includes a service ID of a first RSU and a vehicle service ID of a first OBU, the service ID of the first RSU is configured when the first RSU is registered with the network device, and the vehicle service ID of the first OBU is used by the first RSU to obtain an updated key of the first OBU.

The processing unit 302 is configured to determine the updated key of the first OBU based on the service ID of the first RSU and the vehicle service ID of the first OBU.

The sending unit 303 is configured to send the updated key of the first OBU to the first OBU when the sending unit 303 establishes a connection to the first OBU.

Optionally, in a specific implementation, the sending unit 303 is further configured to send a first registration request to the network device. The first registration request includes location information of the first RSU, so that the network device configures the service ID of the first RSU for the first RSU, to complete registration of the first RSU.

Optionally, in another specific implementation, the processing unit 302 is further configured to establish a near-end connection to the first OBU, for example, establish a C-V2X connection, when detecting that the first OBU is located in a coverage area for which the first RSU is responsible or is close to a coverage area for which the first RSU is responsible.

Optionally, in another specific implementation, the sending unit 303 is specifically configured to send the update message through a PC5 interface.

Optionally, in still another specific implementation, the receiving unit 301 is further configured to receive a first key set sent by the network device. The first key set matches the vehicle service ID of the first OBU. The processing unit 302 is further configured to determine to use the first key set as the updated key of the first OBU.

Optionally, in still another specific implementation, the sending unit 303 is further configured to send a first indication to the first OBU. The first indication is used to indicate a rule in which the first OBU selects a to-be-used key from the first key set.

FIG. 4 is a schematic diagram of a structure of a communication device. The communication device may be a network device, for example, a server in a dedicated cloud, or may be a roadside unit, for example, a first RSU. The communication device includes a processor 110, a memory 120, and at least one communication interface 130. The processor 110, the memory 120, and the at least one communication interface 130 may be coupled through a communication bus.

The processor 110 is a control center of the communication device, and may be used for communication between devices, for example, information transmission with another device such as at least one vehicle-mounted terminal OBU or at least one RSU.

The processor 110 may include an integrated circuit (Integrated Circuit, IC), for example, may include a single packaged IC, or may be formed by connecting a plurality of packaged ICs that have a same function or different functions. For example, the processor 110 may include a central processing unit (Central Processing Unit, CPU) or a digital signal processor (Digital Signal Processor, DSP).

In addition, the processor 110 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. Optionally, the hardware chip is a chip system or a chip circuit.

The memory 120 is configured to store and exchange various types of data or software, including storing at least one registration request, an update request message sent by each vehicle-mounted terminal, a relationship list of a first OBU, and the like. In addition, the memory 120 may store a computer program and code.

Specifically, the memory 120 may include a volatile memory (volatile memory), for example, a random access memory (Random Access Memory, RAM); or may include a nonvolatile memory (nonvolatile memory), for example, a flash memory (flash memory), a hard disk drive (Hard Disk Drive, HDD), or a solid state drive (Solid-State Drive, SSD). The memory 120 may further include a combination of the foregoing types of memories.

The communication interface 130 is any apparatus of a transceiver type, and is configured to communicate with another device or a communication network, for example, the Ethernet, a radio access network (radio access network, RAN), or a wireless local area network (Wireless Local Area Network, WLAN). The at least one communication interface 130 includes a Uu interface, a PC5 interface, wired interfaces in various forms, and the like.

It should be understood that the communication device may further include more or fewer other components, and the structure in this embodiment of this application does not constitute a specific limitation on the communication device. In addition, the components shown in FIG. 4 may be implemented by using hardware, software, firmware, or any combination thereof.

When software is used to implement the components, all or some of the components may be implemented in a form of a computer program product. For example, the receiving unit 301 and the sending unit 303 in the apparatus shown in FIG. 3 may be implemented by using the at least one communication interface 130, functions of the processing unit 302 and/or the configuration unit 304 may be implemented by using the processor 110, and a function of the storage unit may be implemented by using the memory 120.

Specifically, when the communication apparatus is a server in the dedicated cloud, when receiving, through the at least one communication interface 130, a registration request sent by the at least one RSU, the processor 110 is configured to configure one RSU service ID for each RSU. Each registration request includes currently reported location information of the RSU.

The processor 110 is further configured to: when receiving, through the at least one communication interface 130, a request message sent by the first OBU, determine a target RSU based on location information of the first OBU and a coverage area for which at least one RSU is responsible that are carried in the request message, and after determining the target RSU, send an update message to the target RSU through the at least one communication interface 130, where the update message includes a service ID of the target RSU and a vehicle service ID of the first OBU, and the vehicle service ID of the first OBU is used by the target RSU to obtain an updated key of the first OBU.

In addition, when the communication device is a specific RSU, for example, a first RSU, the processor 110 is configured to send a first registration request to the network device through the communication interface 130, to register the first RSU with the network device. The first registration request includes location information of the first RSU. When the first RSU is determined by the network device as the target RSU, the processor 110 is further configured to: receive, through the communication interface 130, the update message sent by the network device, determine the updated key of the first OBU based on a service ID of the first RSU and the vehicle service ID of the first OBU in the update message, and send the updated key to the first OBU when the first RSU establishes a connection to the first OBU.

Specifically, the processor 110 is configured to: establish a near-end connection to the first OBU, and send a first key set to the first OBU through the communication interface 130 after verifying that authentication performed on the first OBU succeeds, where the first key set includes one or more updated keys of the first OBU.

A function of the communication device may be performing the method shown in FIG. 3 in the foregoing embodiment by invoking program code in the memory 120 by using the processor 110.

In addition, the communication device further includes a mobile communication module, a wireless communication module, and the like. The mobile communication module includes a module having a wireless communication function such as 2G/3G/4G/5G. In addition, the mobile communication module may further include a filter, a switch, a power amplifier, a low noise amplifier (low noise amplifier, LNA), and the like. The wireless communication module may provide a wireless communication solution that is applied to a detection device and includes a WLAN, Bluetooth (bluetooth), a global navigation satellite system (global navigation satellite system, GNSS), frequency modulation (frequency modulation, FM), and the like.

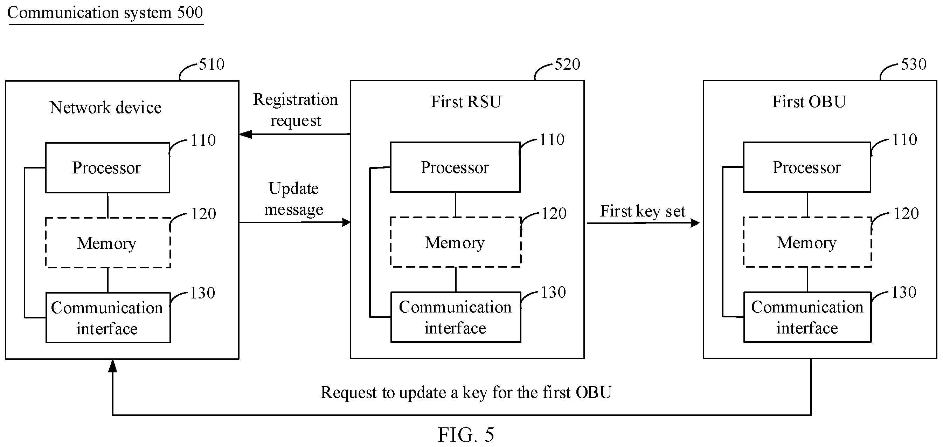

In addition, an embodiment of this application further provides a communication system. The system may be an Internet of Vehicles system or a V2X system in the foregoing embodiments. A structure of the system may be the architecture of the network shown in FIG. 1. Alternatively, as shown in FIG. 5, a communication system 500 includes a network device 510, at least one RSU, and at least one OBU, the at least one RSU includes a first RSU 520, and the at least one OBU includes a first OBU 530.

The network device 510 determines, based on location information reported by the at least one RSU and location information reported by the first OBU 530, a target RSU from at least one RSU that is registered with the network device 510. The network device 510, the target RSU, and the first OBU 530 each may be of the structure of the communication device shown in FIG. 4, and are configured to implement the message sending method and the message receiving method in the embodiment shown in FIG. 2.

In the system provided in this embodiment, when receiving a key update request of the first OBU, the network device sends, to a target RSU nearest to a vehicle through a local wired high-speed V2X network, an update message including a service ID of the target RSU and a vehicle service ID of the first OBU. When the first OBU travels to the vicinity, the target RSU establishes a C-V2X connection to the first OBU, to immediately obtain a key that is delivered by the target RSU and that needs to be used by the first OBU for update, so as to implement distributed updating of a key, and prevent the key from being deciphered and leaked. In the method, security of encrypted communication is improved.

In addition, the update message is transmitted by the network device to the target RSU through a wired network and the target RSU sends the update message to the OBU of the vehicle through a near-end C-V2X message connection, without using a network resource between the OBU of the vehicle and the network device for transmission. Therefore, network resource overheads are reduced, network congestion caused when a large quantity of key update requests occupy a large amount of network bandwidths is avoided, and stability of a wireless network is affected. In the method, an edge distributed update architecture is used, to not only improve key update efficiency, but also avoid network congestion.

An embodiment of this application further provides a computer program product. The computer program product includes one or more computer program instructions. When the computer program instructions are loaded and executed on a computer, all or some procedures or functions in embodiments are generated. The computer may be a general-purpose computer, a dedicated computer, a computer network, or other programmable apparatuses.

The computer program instructions may be stored in a computer-readable storage medium or may be transmitted from one computer-readable storage medium to another computer-readable storage medium. For example, the computer instructions may be transmitted from one communication device, computer, server, or data center to another communication device in a wired or wireless manner.

The computer program product and the computer program instructions may be located in the memory of the communication device, to implement the key update method in embodiments of this application.

In addition, in the descriptions of this application, "a plurality of" means two or more than two unless otherwise specified. In addition, to clearly describe the technical solutions in embodiments of this application, words such as "first" and "second" are used in embodiments of this application to distinguish between same items or similar items that have basically the same functions or purposes. A person skilled in the art may understand that the words such as "first" and "second" do not limit a quantity or an execution sequence, and the words such as "first" and "second" do not indicate a definite difference.

The foregoing descriptions are implementations of this application, but are not intended to limit the protection scope of this application.

## Claims

1. A message sending method, wherein the method comprises:
receiving, by a network device, a request message sent by a first on-board unit OBU, wherein the request message is used to request to update a key for the first OBU, and the request message carries location information of the first OBU;
determining, by the network device, a target roadside unit RSU based on the location information of the first OBU and a coverage area for which at least one RSU is responsible, wherein each of the at least one RSU is responsible for vehicle communication in a coverage area of the RSU, and a location of the first OBU is in a coverage area for which the target RSU is responsible; and
sending, by the network device, an update message to the target RSU, wherein the update message comprises a service ID of the target RSU and a vehicle service ID of the first OBU, the service ID of the target RSU is configured by the network device, and the vehicle service ID of the first OBU is used by the target RSU to obtain an updated key of the first OBU.

2. The method according to claim 1, wherein the method further comprises:
receiving, by the network device, a registration request sent by the at least one RSU, wherein the registration request comprises currently reported location information of the RSU; and
configuring, by the network device, one RSU service ID for each of the at least one RSU.

3. The method according to claim 2, wherein the receiving, by the network device, a registration request sent by the at least one RSU comprises:
receiving, by the network device, the registration request that is sent by the at least one RSU through a wired connection.

4. The method according to any one of claims 1 to 3, wherein before the receiving, by a network device, a request message sent by a first OBU, the method further comprises:
completing, by the network device, registration of the first OBU, and allocating the vehicle service ID of the first OBU to the first OBU.

5. The method according to any one of claims 1 to 4, wherein the sending, by the network device, an update message to the target RSU comprises:
sending, by the network device, the update message to the target RSU based on a hypertext transfer protocol secure HTTPS specification.

6. The method according to any one of claims 1 to 5, further comprising:
sending, by the network device to the target RSU, a first key set that matches the vehicle service ID of the first OBU, wherein the first key set comprises the updated key of the first OBU.

7. A message receiving method, wherein the method comprises:
receiving, by a first RSU, an update message sent by a network device, wherein the update message comprises a service ID of the first RSU and a vehicle service ID of a first OBU, the service ID of the first RSU is configured by the network device, and the vehicle service ID of the first OBU is used by the first RSU to obtain an updated key of the first OBU;
determining, by the first RSU, the updated key of the first OBU based on the service ID of the first RSU and the vehicle service ID of the first OBU; and
sending, by the first RSU, the updated key of the first OBU to the first OBU when the first RSU establishes a connection to the first OBU.

8. The method according to claim 7, wherein the method further comprises:
sending, by the first RSU, a first registration request to the network device, wherein the first registration request comprises location information of the first RSU, and the first registration request is used to register the first RSU with the network device.

9. The method according to claim 7 or 8, wherein that the first RSU establishes a connection to the first OBU comprises:
establishing, by the first RSU, a near-end connection to the first OBU when detecting that the first OBU is located in a coverage area for which the first RSU is responsible or is close to a coverage area for which the first RSU is responsible.

10. The method according to any one of claims 7 to 9, further comprising:
receiving, by the first RSU, a first key set sent by the network device, wherein the first key set matches the vehicle service ID of the first OBU; and
the determining, by the first RSU, the updated key of the first OBU based on the service ID of the first RSU and the vehicle service ID of the first OBU comprises:
determining, by the first RSU, to use the first key set as the updated key of the first OBU.

11. A message sending apparatus, wherein the apparatus comprises:
a receiving unit, configured to receive a request message sent by a first on-board unit OBU, wherein the request message is used to update a key for the first OBU, and the request message carries location information of the first OBU;
a processing unit, configured to determine a target roadside unit RSU based on the location information of the first OBU and a coverage area for which at least one RSU is responsible, wherein each of the at least one RSU is responsible for vehicle communication in a coverage area of the RSU, and a location of the first OBU is in a coverage area for which the target RSU is responsible; and
a sending unit, configured to send an update message to the target RSU, wherein the update message comprises a service ID of the target RSU and a vehicle service ID of the first OBU, the service ID of the target RSU is configured by a network device, and the vehicle service ID of the first OBU is used by the target RSU to obtain an updated key of the first OBU.

12. The apparatus according to claim 11, further comprising a configuration unit, wherein
the receiving unit is further configured to receive a registration request sent by the at least one RSU, wherein the registration request comprises currently reported location information of the RSU; and
the configuration unit is configured to configure one RSU service ID for each of the at least one RSU.

13. The apparatus according to claim 12, wherein the receiving unit is specifically configured to receive the registration request sent by the at least one RSU through a wired connection.

14. The apparatus according to claim 12, wherein
the configuration unit is further configured to: complete registration of the first OBU, and allocate the vehicle service ID of the first OBU to the first OBU.

15. The apparatus according to any one of claims 11 to 14, wherein
the sending unit is further configured to send the update message to the target RSU based on a hypertext transfer protocol secure HTTPS specification.

16. The apparatus according to any one of claims 11 to 15, wherein
the sending unit is further configured to send, to the target RSU, a first key set that matches the vehicle service ID of the first OBU, wherein the first key set comprises the updated key of the first OBU.

17. A message receiving apparatus, wherein the apparatus comprises:
a receiving unit, configured to receive an update message sent by a network device, wherein the update message comprises a service ID of a first RSU and a vehicle service ID of a first OBU, the service ID of the first RSU is configured by the network device, and the vehicle service ID of the first OBU is used by the first RSU to obtain an updated key of the first OBU;
a processing unit, configured to determine the updated key of the first OBU based on the service ID of the first RSU and the vehicle service ID of the first OBU; and
a sending unit, configured to send the updated key of the first OBU to the first OBU when the sending unit establishes a connection to the first OBU.

18. The apparatus according to claim 17, wherein
the sending unit is further configured to send a first registration request to the network device, wherein the first registration request comprises location information of the first RSU, and the first registration request is used to register the first RSU with the network device.

19. The apparatus according to claim 17 or 18, wherein
the processing unit is further configured to establish a near-end connection to the first OBU when detecting that the first OBU is located in a coverage area for which the first RSU is responsible or is close to a coverage area for which the first RSU is responsible.

20. The apparatus according to any one of claims 17 to 19, wherein
the receiving unit is further configured to receive a first key set sent by the network device, wherein the first key set matches the vehicle service ID of the first OBU; and
the processing unit is further configured to determine to use the first key set as the updated key of the first OBU.

21. A communication device, comprising a processor and a memory, wherein the processor is coupled to the memory;
the memory is configured to store computer program instructions; and
the processor is configured to execute the instructions stored in the memory, so that the communication device performs the method according to any one of claims 1 to 6 or the method according to any one of claims 7 to 10.

22. A computer-readable storage medium, wherein the computer-readable storage medium stores computer program instructions; and
when the computer program instructions are run, the method according to any one of claims 1 to 6 or the method according to any one of claims 7 to 10 is implemented.

23. A computer program product, wherein when the computer program product runs on a computer, the method according to any one of claims 1 to 6 is performed, or the method according to any one of claims 7 to 10 is performed.
